# EUROPÄISCHE PATENTSCHRIFT

(11) **EP 0 523 403 B1**
(45) Veröffentlichungstag und Bekanntmachung des Hinweises auf die Patenterteilung: **22.01.1997**
(21) Anmeldenummer: 92110487.3
(22) Anmeldetag: 22.06.1992
(51) Int. Cl.: B65D 25/10, B65D 85/42

(54) **Mehrweg-Verpackung für stabförmige Leuchtstofflampen**
Returnable package for cylindrical fluorescent lamps
Emballage réutilisable pour lampes fluorescentes

(30) Priorität: 04.07.1991 EP 91111159
(43) Veröffentlichungstag der Anmeldung: 20.01.1993
(73) Patentinhaber: Patent-Treuhand-Gesellschaft für elektrische Glühlampen mbH, 81543 München (DE)
(72) Erfinder: Scherer, Volker, Dr., W-8033 Krailling (DE); Neumann, Gerhard Mandred, Dr., W-8012 Ottobrunn (DE)

(56) Entgegenhaltungen:
- EP-A- 0 279 754
- DE-A- 2 216 703
- DE-A- 2 806 977
- US-A- 3 747 751
- US-A- 4 834 239
- US-A- 4 942 965

## Beschreibung

Die Erfindung betrifft eine Mehrweg-Verpackung für stabförmige Leuchtstofflampen gemäß dem Oberbegriff der Patentansprüche 1, 7 oder 10.

Eine derartige Verpackung ist in dem deutschen Gebrauchsmuster 72 12 971 offenbart. Diese Verpackung besitzt einen dem Mantel eines Quaders entsprechenden Mantelkörper aus Wellpappe, dessen stirnseitige Öffnungen durch kastenförmig ausgebildete Bodenelemente aus Kunststoff verschlossen werden. Die beiden Bodenelemente sind mit einer Anzahl von topfartigen Vertiefungen zur Aufnahme der freien Enden von stabförmigen Leuchtstofflampen versehen. Am Mantelkörper sind mehrere Laschen angeformt, die jeweils entlang einer Kante eines Bodenelementes zurückgefaltet werden und die Verbindung der Bodenelemente mit dem Mantelkörper gewährleisten.

Ein gravierender Nachteil der im oben zitierten Gebrauchsmuster offenbarten Verpackung besteht in ihrer mangelhaften Haltbarkeit. Da ihr Mantelkörper aus Wellpappe gefertigt ist, weisen diese Verpackungen bereits nach kurzer Zeit Beschädigungen auf. Insbesondere werden die Verschlußlaschen schon nach wenigen Einsätzen unbrauchbar, weil sie z.B. entlang ihrer Faltkante einreißen. Als Mehrweg-Verpackung für Leuchtstofflampen sind diese Verpackungen daher kaum geeignet.

Der Erfindung liegt die Aufgabe zugrunde, eine Mehrweg-Verpackung für stabförmige Leuchtstofflampen bereitzustellen, die sich durch eine gute Haltbarkeit auszeichnet.

Diese Aufgabe wird erfindungsgemäß durch die kennzeichnenden Merkmale der Patentansprüche 1, 7 oder 10 gelöst.

Die erfindungsgemäße Mehrweg-Verpackung für stabförmige Leuchtstofflampen besteht vollständig aus Kunststoff und kann daher oftmals verwendet werden, wie das in der Getränke-Industrie bei Trägern für Pfandflaschen bereits gebräuchlich ist. Dadurch wird nun auch bei der Verpackung von Leuchtstofflampen eine drastische Reduktion der Abfallmenge erreicht. Die Mehrweg-Verpackung besitzt einen quaderförmigen Mantelkörper, dessen offene Stirnseiten durch zwei Bodenelemente verschlossen werden. Dabei sind die Bodenelemente und der Mantelkörper vorzugsweise mit einem einfach zu betätigenden Schnappverschluß lösbar miteinander verbunden. Vorteilhafterweise ist die erfindungsgemäße Mehrweg-Verpackung auch mit einem die Leuchtstofflampen abstützenden Innenteil ausgestattet. Da der Mantelkörper entlang seiner Längskanten scharnierartige Elemente aufweist und die Innenteile aus flexiblem Material bestehen, läßt sich der Mantelkörper flachlegen, so daß die erfindungsgemäße Verpackung im leeren Zustand platzsparend aufbewahrt werden kann.

Bei einem der bevorzugten Ausführungsbeispiele kann das Innenteil auch als Raumteiler ausgebildet sein, so daß im Falle eines Lampenbruchs keine Kontamination der anderen mit Lampen bestückten Hohlräume der Verpackung durch Quecksilber und Glasscherben stattfindet.

Gemäß eines weiteren bevorzugten Ausführungsbeispiels besitzt die Mehrweg-Verpackung vorteilhaft einen wendbaren Mantelkörper, bei dem Innen- und Außenseite miteinander vertauschbar sind. So kann der Mantelkörper der erfindungsgemäßen Verpackung auf seiner Außenseite einen Werbeaufdruck des Lampenherstellers aufweisen, während auf der Innenseite des Mantelkörpers der Aufdruck "Recycling-Lampen" angebracht ist. Enthält nun die erfindungsgemäße Mehrweg-Verpackung vom Händler zurückgenommene, verbrauchte Leuchtstofflampen, so wird die Innenseite des Mantelkörpers mit dem Aufdruck "Recycling-Lampen" nach außen gekehrt. Beim Lampenhersteller werden diese Mehrweg-Verpackungen mit den verbrauchten Lampen geleert und wieder mit neuen Leuchtstofflampen bestückt, wobei der Mantelkörper der Verpackung wieder gewendet wird. Der einfache Druckverschluß erlaubt dem Lampenhersteller ein maschinelles Entleeren und Bestücken der erfindungsgemäßen Mehrweg-Verpackung.

Vorteilhafterweise sind die Bodenelemente auf beiden Stirnflächen mit Vertiefungen von unterschiedlichem Durchmesser versehen. Dadurch kann dieselbe Verpackung für zwei unterschiedliche Leuchtstofflampentypen, z.B. für T8- und T12-Leuchtstofflampen, verwendet werden. Außerdem ist es möglich, zwei Mantelkörper und drei Bodenelemente zu einer Verpackungseinheit zusammenzusetzen. Ein mittig umlaufender Wulst an den Seitenflächen der Bodenelemente bietet den Vorteil, daß die Druckknöpfe vor Beschädigungen geschützt werden und der Mantelkörper an seinen stirnseitigen Kanten zusätzlich abgestützt wird.

Die Erfindung wird nachstehend anhand mehrerer bevorzugter Ausführungsbeispiele näher erläutert.
Es zeigen:
- Figur 1: eine perspektivische Darstellung der erfindungsgemäßen Verpackung nach einem ersten Ausführungsbeispiel
- Figur 2: eine Draufsicht auf den auseinandergeklappten Mantelkörper der Verpackung aus der Figur 1
- Figur 3a: eine Draufsicht auf die erste Stirnfläche eines Bodenelementes der erfindungsgemäßen Verpackung aus Figur 1
- Figur 3b: einen Querschnitt durch das Bodenelement der Verpackung entsprechend dem ersten Ausführungsbeispiel
- Figur 3c: eine Draufsicht auf die zweite Stirnfläche des Bodenelementes entsprechend dem ersten Ausführungsbeispiel
- Figur 4: einen Querschnitt durch die Verschlußvorrichtung der erfindungsgemäßen Verpackung nach dem ersten Ausführungsbeispiel
- Figur 5: einen Querschnitt durch die erfindungsgemäße Mehr-Verpackung entsprechend eines zweiten Ausführungsbeispiels
- Figur 6: eine Draufsicht auf einen Teil des Mantelkörpers mit eingesetztem Innenteil gemäß des zweiten Ausführungsbeispiels
- Figur 7: einen Querschnitt durch ein Bodenelement und einen Teil des Mantelkörpers gemäß eines dritten Ausführungsbeispiels.

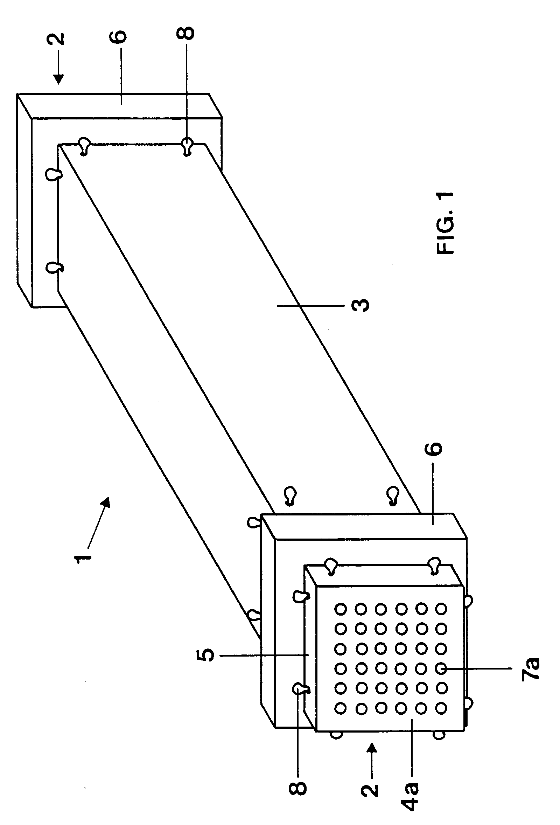

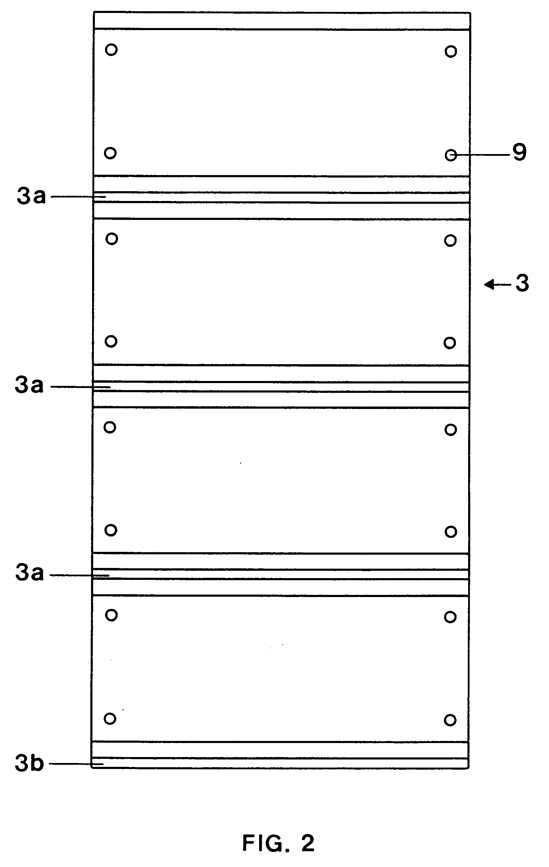

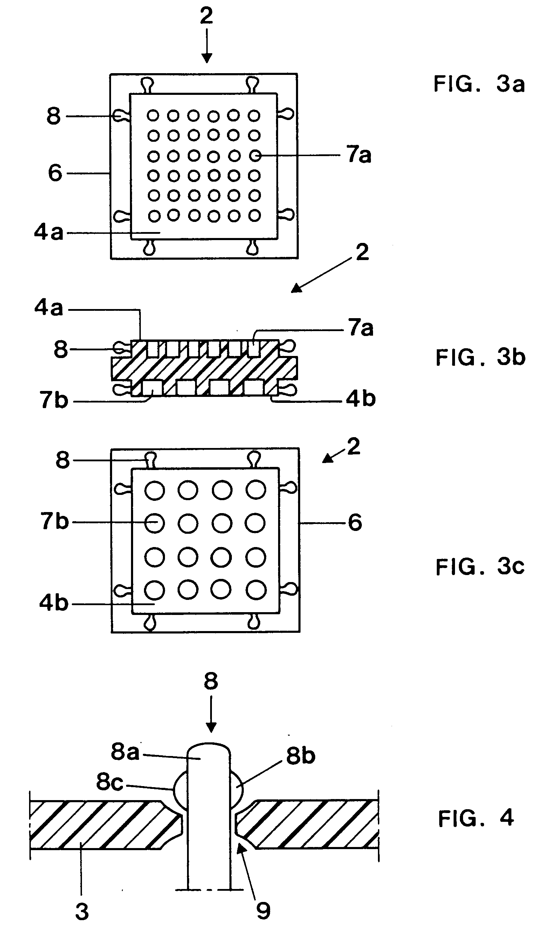

Sämtliche Abbildungen sind nicht maßstabsgetreu und stark schematisiert. Insbesondere zeigen die Figuren 1 bis 3c keine Einzelheiten der Verschlußvorrichtung der erfindungsgemäßen Verpackung.

Die erfindungsgemäße Mehrweg-Verpackung 1 für stabförmige Leuchtstofflampen entsprechend einem ersten Ausführungsbeispiel besteht aus Polypropylene. Sie besitzt zwei gleichartige Bodenelemente 2 und einen einteiligen Mantelkörper 3, dessen Form dem Mantel eines Quaders mit offenen Stirnseiten entspricht. Der Mantelkörper 3 hat vier Seitenwände, die über ihre ersten drei axial verlaufenden Längskanten 3a miteinander verbunden sind. Entlang der vierten Längskante 3b der Seitenwände ist der Mantelkörper 3 aufgeschlitzt. Die Wandstärke des Mantelkörpers 3 ist im Bereich der ersten drei Längskanten 3a der Seitenwände stark reduziert, so daß das Material dort biegsam ist und die Funktion eines Scharniers übernehmen kann, das sich in beide Richtungen drehen läßt. Dadurch kann der Mantelkörper 3 entlang der vierten Längskante 3b aufgeklappt und gewendet werden, so daß seine Innen- mit seiner Außenseite vertauscht wird. Die Höhe des Mantelkörpers 3 ist auf die Länge der zu verpackenden Leuchtstofflampen abgestimmt. Die beiden Bodenelemente 2 verschließen die offnenen Stirnseiten des Mantelkörpers 3. Sie haben die Form eines Quaders mit zwei zueinander gegenüberliegenden quadratischen Stirnflächen 4a, 4b und vier senkrecht zu den Stirnflächen 4a, 4b angeordneten Seitenflächen 5. Die Seitenflächen 5 der Bodenelemente 2 werden mittig von einem Wulst 6 umlaufen, der den stirnseitigen Kanten des Mantelkörpers 3 als Anschlag dient. Beide Stirnflächen 4a, 4b der Bodenelemente 2 weisen eine Vielzahl von Vertiefungen 7a, 7b zur Aufnahme der Enden von stabförmigen Leuchtstofflampen auf. Die erste Stirnfläche 4a besitzt sechsunddreissig Vertiefungen 7a, deren Durchmesser auf den Durchmesser sogenannter T8-Leuchtstofflampen abgestimmt ist, während die zweite Stirnfläche 4b mit sechzehn Vertiefungen 7b versehen ist, deren Durchmesser auf den Durchmesser sogenannter T12-Leuchtstofflampen abgestimmt ist. Die Tiefe der Vertiefungen 7a, 7b ist größer als die Länge der Kontaktstifte der zu verpackenden Leuchtstofflampen, so daß nicht nur die Kontaktstifte, sondern auch Teile des Entladungsgefäßes der Leuchtstofflampen von den Vertiefungen 7a, 7b aufgenommen werden. Entlang seiner Umfangsfläche, die von den vier Seitenflächen 5 gebildet wird, weist jedes Bodenelement 2 insgesamt sechzehn Druckknöpfe 8 auf, die spiegelsymmetrisch bezüglich des Wulstes 6 angeordnet sind. Jeder Druckknopf 8 besitzt einen zylindrischen Grundkörper 8a und zwei Verriegelungsstifte 8b. Die Verriegelungsstifte 8b sind federnd im Grundkörper 8a gehalten und können durch ausreichenden Druck auf ihre abgerundete Kante 8c vollständig im Grundkörper 8a versenkt werden. Der Mantelkörper 3 ist mit insgesamt sechzehn kreisscheibenförmigen Durchbrüchen 9 versehen, deren Durchmesser auf den Durchmesser der Grundkörper 8a der Druckknöpfe 8 abgestimmt ist.

Beim Verschließen der erfindungsgemäßen Verpackung 1 durchdringen die Druckknöpfe 8 den ihnen zugeordneten Durchbruch 9 und hinterrasten mit ihren Verriegelungsstiften 8b jeweils in einer muldenartigen Vertiefung der Seitenwände 3, die die Durchbrüche 9 umgeben. Während der Druckknopf 8 den Durchbruch 9 durchdringt, übt die Begrenzung des Durchbruchs 9 einen Druck auf die abgerundeten Kanten 8c der federnd gehalterten Verriegelungsstifte 8b aus, so daß diese währenddessen in den Grundkörper 8a des Druckknopfes 8 zurückgedrängt werden.

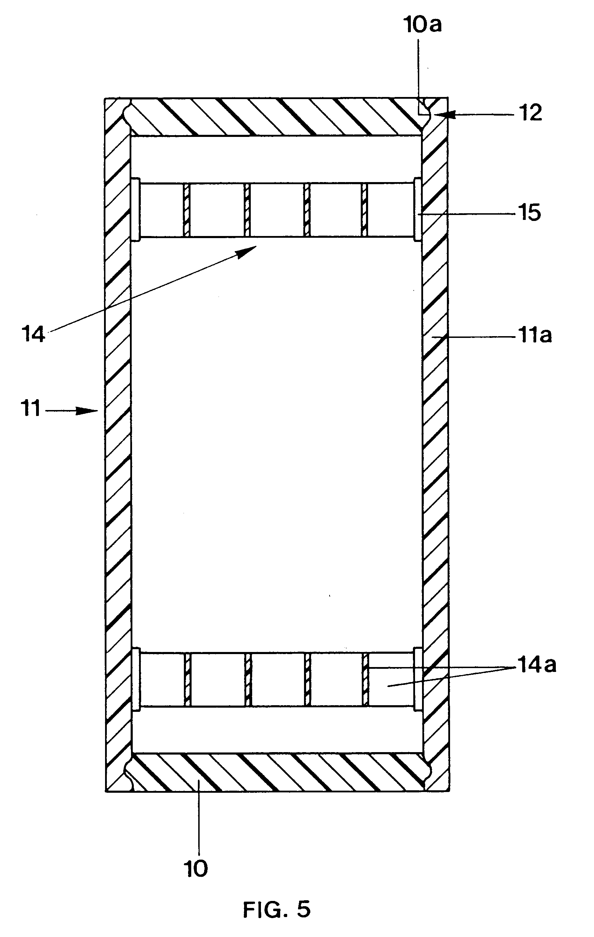

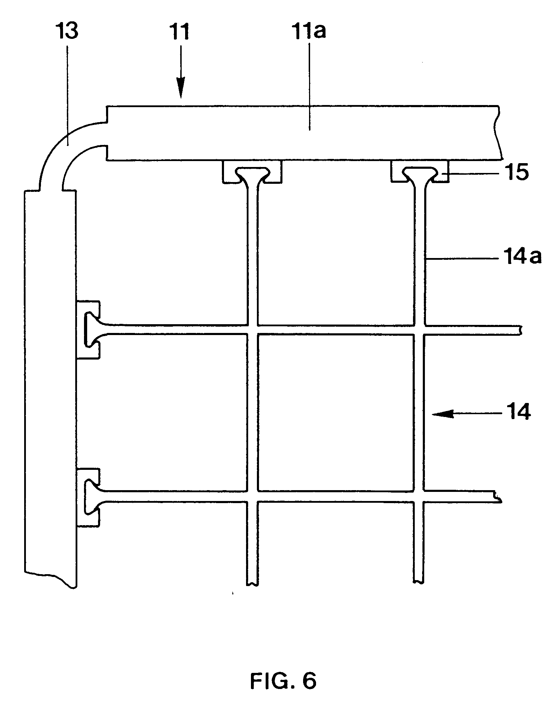

Beim zweiten Ausführungsbeispiel (Figuren 5 und 6) bestehen die beiden Bodenelemente 10 aus jeweils einer Kunststoffplatte mit rechteckigem Querschnitt, die an ihren Schmalseiten mit Vorsprüngen 10a ausgestattet ist. Diese Vorsprünge 10a greifen in paßgerechte Kerben 12 in den Seitenwänden 11a des Mantelkörpers 11 und bilden mit diesem einen leicht zu betätigenden Schnappverschluß 10a, 12. Der Mantelkörper 11 dieses Ausführungsbeispiels hat im wesentlichen die gleiche Form wie der des ersten Ausführungsbeispiels, ist allerdings nicht entlang einer Längskante aufgeschlitzt, sondern besitzt eine geschlossene Mantelfläche. Sämtliche Längskanten des Mantelkörpers 11 sind mit scharnierartigen Elementen 13 versehen, die hier als flexibles Kunststoffband 13 ausgebildet sind, so daß der Mantelkörper 11 flachgelegt werden kann. Der Mantelkörper 11 wird nach dem Aufrichten erst durch das Einsetzen eines Bodenelementes 10 stabilisiert. Damit sich die Bodenelemente 10 nicht durch das Gewicht der hineingestellten Leuchtstofflampen wieder vom Mantelkörper 11 lösen, werden sie jeweils mit zwei Verriegelungsstiften (nicht abgebildet) arretiert. Diese Verriegelungsstifte werden jeweils durch je eine Bohrung, die in gegenüberliegenden Seitenwänden des Mantelkörpers 11 angebracht sind, gesteckt und greifen in eine paßgerechte Ausnehmung des entsprechenden Bodenelementes 10 ein.

Zur Abstützung der Leuchtstofflampen ist der Mantelkörper 11 mit zwei gleichartigen Innenteilen 14 ausgestattet. Beide Innenteile 14 bestehen aus einer Vielzahl von sich überkreuzenden flexiblen Kunststoffbändern 14a, deren Enden an gegenüberliegenden Seitenwänden 11a des Mantelkörpers 11 fixiert sind, so daß sie ein Gitter bilden. Die Dicke dieser Kunststoffbänder 14a beträgt nur wenige Zehntelmillimeter, damit sie beim Flachlegen des Mantelkörpers 11 keinen Widerstand leisten. Die Kunststoffbänder 14a werden mittels Haltevorrichtungen 15, die einteilig mit den Seitenwänden 11a ausgeführt sind, befestigt. Diese Haltevorrichtungen 15 besitzen jeweils eine paßgerechte Aufnahme für das verdickte Ende eines Kunststoffbandes, in die dieses verdickte Ende von oben eingesetzt werden kann.

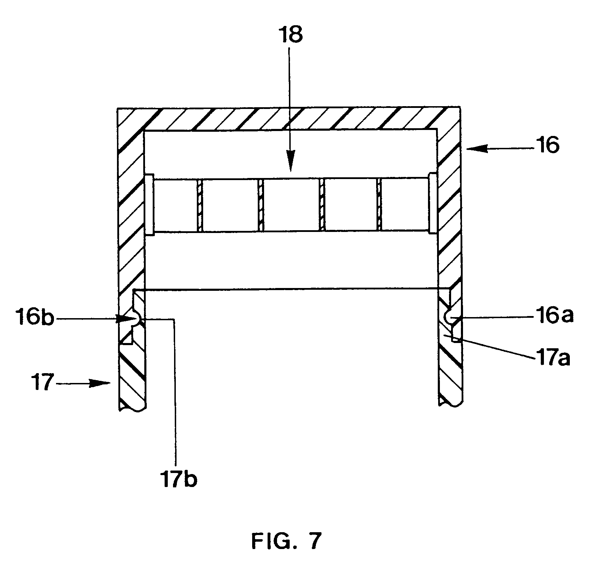

Beim dritten Ausführungsbeispiel (Figur 7) sind die beiden Bodenelemente 16 kastenförmig und mit rechteckigem Querschnitt ausgebildet. Der Mantelkörper 17 ist, abgesehen vom Schnappverschluß 16b, 17b zwischen Mantelkörper 17 und Bodenelement 16, identisch mit dem Mantelkörper 11 des zweiten Ausführungsbeispiels. Der Schnappverschluß wird von zwei Laschen 16a, die an gegenüberliegenden Seitenwänden des Bodenelementes 16 angeformt sind, und von zwei Laschen 17a, die an gegenüberliegenden Seitenwänden des Mantelkörpers 17 angeformt sind, gebildet, wobei die Laschen 16a des Bodenelementes 16 jeweils einen Vorsprung 16b und die Laschen 17a eine Kerbe 17b aufweisen, die paßgerecht aufeinander abgestimmt sind. Außerdem sind innerhalb der kastenförmigen Bodenelemente Innenteile 18 angebracht, die in ihrer Ausgestaltung und Haltevorrichtung vollkommen mit den Innenteilen 14 des zweiten Ausführungsbeispiels übereinstimmen.

Die Erfindung beschränkt sich nicht nur auf die beschriebenen Ausführungsbeispiele. Beispielsweise können beim ersten Ausführungsbeispiel die Vertiefungen in den Stirnflächen der Bodenelemente auch auf Leuchtstofflampen mit einem anderen Durchmesser abgestimmt sein als oben aufgeführt. Ferner müssen die Bodenelemente keine quadratischen Stirnflächen besitzen und außerdem kann die Zahl der Vertiefungen für die Leuchtstofflampenenden und damit auch die Größe der Verpackung variieren. Ebenso ist es möglich, anstelle der oben beschriebenen Verschlußvorrichtung eine einfache Steckverbindung oder einen anderen Druckverschluß zu benutzen, die sich ebenfalls auf einfache Weise maschinell oder manuell betätigen lassen.

Ferner können beim zweiten Ausführungsbeispiel die Bodenelemente 10 ebenfalls Vertiefungen zur Aufnahme der Leuchtstofflampenenden aufweisen. Außerdem ist es möglich, anstelle zweier Innenteile 14 nur ein einziges Innenteil zu verwenden, das sich nahezu über die gesamte Länge des Mantelkörpers 11 erstreckt und als Raumteiler wirkt, so daß der Innenraum des Mantelkörpers 11 in eine Vielzahl von gleichartigen zylindrischen Hohlräumen zur Aufnahme jeweils einer stabförmigen Leuchtstofflampe unterteilt wird. Das Innenteil kann auch einteilig mit dem Mantelkörper ausgeführt sein.
Ferner ist es möglich, den Mantelkörper entlang seiner Längskanten, anstelle der flexiblen Kunststoffbänder, auch mit gewöhnlichen Scharnieren aus Metall oder Kunststoff auszurüsten.

Schließlich können beim dritten Ausführungsbeispiel die Innenteile 18 auch innerhalb des Mantelkörpers 17 angeordnet sein.

## Patentansprüche

1. Mehrweg-Verpackung (1) für stabförmige Leuchtstofflampen, wobei die Verpackung (1) einen einteiligen Mantelkörper (3) besitzt, dessen Form dem Mantel eines an den Stirnseiten offenen Quaders entspricht, und dessen Öffnungen durch zwei gleichartige Bodenelemente (2) verschlossen werden, dadurch gekennzeichnet, daß
- der Mantelkörper (3) und die Bodenelemente (2) aus Kunststoff bestehen,
- der Mantelkörper (3) und die Bodenelemente (2) durch einen Schnappverschluß (8, 9) lösbar miteinander verbunden sind,
- die vier Seitenwände des Mantelkörpers (3) zumindest entlang dreier Längskanten (3a) mittels scharnierartiger Elemente miteinander verbunden sind,
- die Bodenelemente (2) die Gestalt eines Quaders mit zwei einander gegenüberliegenden Stirnflächen (4a, 4b) und vier senkrecht zu den Stirnflächen (4a, 4b) angeordneten Seitenflächen (5) besitzen, wobei die Seitenflächen (5) einen mittig umlaufenden Wulst (6) aufweisen und beide Stirnseiten (4a, 4b) mit Vertiefungen (7a, 7b) versehen sind, die zur Aufnahme der Leuchtstofflampenenden dienen.

2. Mehrweg-Verpackung nach Anspruch 1, dadurch gekennzeichnet, daß der Schappverschluß aus einem Druckknopfverschluß besteht, wobei jedes Bodenelement (2) entlang seiner Umfangsfläche, die durch die vier Seitenflächen (5) gebildet wird, einen oder mehrere Druckknöpfe (8) aufweist und der Mantelkörper (3) ebenso viele Durchbrüche (9) besitzt, deren Form und Abmessungen paßgerecht auf die Gestalt und die entsprechenden Maße der Druckknöpfe (8) abgestimmt sind, so daß eine lösbare Verbindung zwischen demMantelkörper (3) und den Bodenelementen (2) besteht.

3. Mehrweg-Verpackung nach Anspruch 1, dadurch gekennzeichnet, daß der Mantelkörper (3) entlang der vierten Längskante (3b) aufgeschlitzt ist.

4. Mehrweg-Verpackung nach Anspruch 1, dadurch gekennzeichnet, daß die Vertiefungen (7a, 7b) auf beiden Stirnflächen (4a, 4b) eines Bodenelementes (2) den gleichen Durchmesser besitzen.

5. Mehrweg-Verpackung nach Anspruch 1, dadurch gekennzeichnet, daß die Vertiefungen (7a) auf der einen Stirnfläche (4a) des Bodenelementes (2) einen anderen Durchmesser besitzen als die Vertiefungen (7b) auf der zweiten Stirnfläche (4b) desselben Bodenelementes (2).

6. Mehrweg-Verpackung nach Anspruch 2, dadurch gekennzeichnet, daß die Druckknöpfe (8) spiegelsymmetrisch zu beiden Seiten des Wulstes (6) angeordnet sind.

7. Mehrweg-Verpackung für stabförmige Leuchtstofflampen, wobei die Verpackung einen einteiligen Mantelkörper (11) besitzt, dessen Form dem Mantel eines an den Stirnseiten offenen Quaders entspricht, und dessen Öffnungen durch zwei gleichartige Bodenelemente (10) verschlossen werden, dadurch gekennzeichnet, daß
- der Mantelkörper (11) und die Bodenelemente (10) aus Kunststoff bestehen,
- der Mantelkörper (11) und die Bodenelemente (10) durch einen Schnappverschluß (10a, 12) lösbar miteinander verbunden sind,
- die vier Seitenwände (11a) des Mantelkörpers (11) entlang ihrer Längskanten (3a) mittels scharnierartiger Elemente (13) miteinander verbunden sind,
- der Mantelkörper (11) mit mindestens einem zur Abstützung der Leuchtstofflampen dienenden Innenteil (14) aus flexiblem Material ausgestattet ist,
- die Bodenelemente (10) als Platten mit rechteckigem Querschnitt ausgebildet sind, die entlang ihrer Schmalseiten Vorsprünge (10) aufweisen, welche ihrerseits in paßgerechte Kerben (12) in den Seitenwänden (11a) des Mantelkörpers (11) einschnappen.

8. Mehrweg-Verpackung nach Anspruch 7, dadurch gekennzeichnet, daß das Innenteil als Raumteiler mit durchgehenden Trennwänden ausgebildet ist, der den Innenraum des Mantelkörpers in eine Vielzahl von gleichartigen zylindrischen Hohlräumen unterteilt.

9. Mehrweg-Verpackung nach Anspruch 7, dadurch gekennzeichnet, daß die Verpackung zwei identische Innenteile (14) besitzt, die jeweils aus einer Vielzahl von flexiblen Kunststoffbändern (14a) bestehen, wobei jedes Kunststoffband (14a) mit seinen Enden an gegenüberliegenden Seitenwänden (11a) des Mantelkörpers (11) befestigt ist, so daß die Kunststoffbänder eines jeden Innenteils (14) ein Gitter bilden.

10. Mehrweg-Verpackung für stabförmige Leuchtstofflampen, wobei die Verpackung einen einteiligen Mantelkörper (17) besitzt, dessen Form dem Mantel eines an den Stirnseiten offenen Quaders entspricht, und dessen Öffnungen durch zwei gleichartige Bodenelemente (16) verschlossen werden, dadurch gekennzeichnet, daß
- der Mantelkörper (17) und die Bodenelemente (16) aus Kunststoff bestehen,
- die vier Seitenwände des Mantelkörpers (17) zumindest entlang dreier Längskanten mittels scharnierartiger Elemente miteinander verbunden sind,
- der Mantelkörper (17) und die Bodenelemente (16) durch einen Schnappverschluß (16a, 17a, 16b, 17b) lösbar miteinander verbunden sind,
- die Bodenelemente (16) kastenförmig und mit rechteckigem Querschnitt ausgebildet sind, wobei ihre Seitenwände Vorsprünge (16a, 16b) aufweisen, die in paßgerechte Kerben (17a, 17b) in den Seitenwänden des Mantelkörpers (17) einschnappen,
- die Bodenelemente (16) jeweils mit einem zur Abstützung der Leuchtstofflampen dienenden Innenteil (18) aus flexiblem Material ausgestattet sind.

11. Mehrweg-Verpackung nach Anspruch 10, dadurch gekennzeichnet, daß die Verpackung zwei identische Innenteile (14) besitzt, die jeweils innerhalb eines der beiden kastenförmigen Bodenelemente (16) angeordnet sind und aus einer Vielzahl von flexiblen Kunststoffbändern (14a) bestehen, wobei jedes Kunststoffband (14a) mit seinen Enden an gegenüberliegenden Seitenwänden eines kastenförmigen Bodenelementes (16) befestigt ist, so daß die Kunststoffbänder ein Gitter bilden.

12. Mehrweg-Verpackung nach einem der Ansprüche 1, 7 oder 10, dadurch gekennzeichnet, daß die scharnierartigen Elemente (13) jeweils als flexibles Kunststoffband ausgebildet sind.

13. Mehrweg-Verpackung nach einem der Ansprüche 1, 7 oder 10, dadurch gekennzeichnet, daß der Mantelkörper (3; 11; 17) flachlegbar ist.

## Claims

1. Returnable package (1) for tubular fluorescent lamps, the package (1) having a one-piece envelope member (3) whose shape corresponds to the envelope of a cuboid open at the end faces, and whose openings are sealed by two similar base elements (2), characterized in that
- the envelope member (3) and the base elements (2) consist of plastic,
- the envelope member (3) and the base elements (2) are detachably joined to one another by a snap lock (8, 9),
- the four side walls of the envelope member (3) are joined to one another by means of hinge-like elements at least along three longitudinal edges (3a),
- the base elements (2) have the shape of a cuboid with two mutually opposite end faces (4a, 4b) and four side faces (5) arranged perpendicular to the end faces (4a, 4b), the side faces (5) having a flange (6) running round in a centred fashion, and the two end faces (4a, 4b) being provided with depressions (7a, 7b) which serve to receive the ends of the fluorescent lamps.

2. Returnable package according to Claim 1, characterized in that the snap lock comprises a pushbutton lock, each base element (2) having one or more push-buttons (8) along its circumferential surface, which is formed by the four side faces (5), and the envelope member (3) having just as many openings (9) whose shape and dimensions are adapted to fit the configuration and the corresponding dimensions of the pushbuttons (8), with the result that there is a detachable joint between the envelope member (3) and the base elements (2).

3. Returnable package according to Claim 1, characterized in that the envelope member (3) is slit open along the fourth longitudinal edge (3b).

4. Returnable package according to Claim 1, characterized in that the depressions (7a, 7b) on the two end faces (4a, 4b) of a base element (2) have the same diameter.

5. Returnable package according to Claim 1, characterized in that the depressions (7a) on the one end face (4a) of the base element (2) have a different diameter than the depressions (7b) on the second end face (4b) of the same base element (2).

6. Returnable package according to Claim 2, characterized in that the pushbuttons (8) are arranged with mirror symmetry relative to the two sides of the flange (6).

7. Returnable package for tubular fluorescent lamps, the package having a one-piece envelope member (11) whose shape corresponds to the envelope of a cuboid open at the end faces, and whose openings are sealed by two similar base elements (10), characterized in that
- the envelope member (11) and the base elements (10) consist of plastic,
- the envelope member (11) and the base elements (10) are detachably joined to one another by a snap lock (10a, 12),
- the four side walls (11a) of the envelope member (11) are joined to one another by means of hinge-like elements (13) along their longitudinal edges (3a),
- the envelope member (11) is fitted with at least one internal part (14) which serves to support the fluorescent lamps and consists of flexible material,
- the base elements (10) are constructed as plates of rectangular cross-section, which have along their narrow sides projections (10) which for their part snap into fitting notches (12) in the side walls (11a) of the envelope member (11).

8. Returnable package according to Claim 7, characterized in that the internal part is constructed as a space divider with continuous partitions which subdivide the interior of the envelope member into a multiplicity of similar cylindrical cavities.

9. Returnable package according to Claim 7, characterized in that the package has two identical internal parts (14) which respectively comprise a multiplicity of flexible plastic strips (14a), each plastic strip (14a) being fastened with its ends to opposite side walls (11a) of the envelope member (11), with the result that the plastic strips of each internal part (14) form a grid.

10. Returnable package for tubular fluorescent lamps, the package having a one-piece envelope member (17) whose shape corresponds to the envelope of a cuboid open at the end faces, and whose openings are sealed by two similar base elements (16), characterized in that
- the envelope member (17) and the base elements (16) consist of plastic,
- the four side walls of the envelope member (17) are joined to one another by means of hinge-like elements at least along three longitudinal edges,
- the envelope member (17) and the base elements (16) are detachably joined to one another by a snap lock (16a, 17a, 16b, 17b),
- the base elements (16) are constructed in the shape of a box and with a rectangular cross-section, the side walls having projections (16a, 16b) which snap into fitting notches (17a, 17b) in the side walls of the envelope member (17),
- the base elements (16) are respectively fitted with an internal part (18) which serves to support the fluorescent lamps and is made from flexible material.

11. Returnable package according to Claim 10, characterized in that the package has two identical internal parts (14) which are respectively arranged inside one of the two box-shaped base elements (16) and comprise a multiplicity of flexible plastic strips (14a), each plastic strip (14a) being fastened with its ends to opposite side walls of a box-shaped base element (16), with the result that the plastic strips form a grid.

12. Returnable package according to one of Claims 1, 7 or 10, characterized in that the hinge-like elements (13) are respectively constructed as a flexible plastic strip.

13. Returnable package according to one of Claims 1, 7 or 10, characterized in that the envelope member (3; 11;17) can be laid flat.

## Revendications

1. Emballage (1) réutilisable de lampes fluorescentes en forme de barreau, l'emballage (1) comportant une enveloppe (3) latérale d'une seule pièce, dont la forme correspond à la surface latérale d'un parallélépipède ouvert sur les faces frontales et dont les ouvertures sont fermées par deux éléments (2) formant fond semblables, caractérisé en ce que
- l'enveloppe (3) latérale et les éléments (2) formant fond sont en matière plastique,
- l'enveloppe (3) latérale et les éléments (2) formant fond sont reliés entre eux de manière amovible par une fermeture (8,9) à encliquetage,
- les quatre parois latérales de l'enveloppe (3) latérale sont reliées entre elles au moins sur trois grands côtés (3a), au moyen d'éléments du genre d'une charnière,
- les éléments (2) formant fond ont la forme d'un parallélépipède ayant deux faces (4a, 4b) frontales qui se font face et quatre faces (5) latérales qui sont disposées perpendiculairement aux faces (4a, 4b) frontales, les faces (5) latérales comportant au milieu un bourrelet (6) faisant tout le tour, et les deux faces (4a, 4b) frontales étant munies de cavités (7a, 7b) qui servent à la réception des extrémités des lampes fluorescentes.

2. Emballage réutilisable suivant la revendication 1, caractérisé en ce que la fermeture encliquetable consiste en une fermeture par bouton-pression, chaque élément (2) formant fond comportant sur sa surface périphérique, qui est formée par les quatre faces (5) latérales, un ou plusieurs boutons-pression (8), et l'enveloppe (3) latérale comportant tout autant de passages (9) dont la forme et les dimensions sont adaptées de manière ajustée à la forme et aux dimensions correspondantes des boutons-pression (8), si bien qu'il existe une liaison amovible entre l'enveloppe (3) latérale et les éléments (2) formant fond.

3. Emballage réutilisable suivant la revendication 1, caractérisé en ce que l'enveloppe (3) latérale est fendue sur le quatrième grand côté (3b).

4. Emballage réutilisable suivant la revendication 1, caractérisé en ce que les cavités (7a, 7b) des deux faces (4a, 4b) frontales d'un élément (2) formant fond ont le même diamètre.

5. Emballage réutilisable suivant la revendication 1, caractérisé en ce que les renfoncements (7a) de l'une des faces (4a) frontales de l'élément (2) formant fond ont un diamètre différent de celui des renfoncements (7a) de la deuxième face (4b) frontales du même élément (2) formant fond.

6. Emballage réutilisable suivant la revendication 2, caractérisé en ce que les boutons-pression (8) sont disposées symétriques comme en un miroir de part et d'autre du bourrelet (6).

7. Emballage réutilisable de lampes fluorescentes en forme de barreau, l'emballage comportant une enveloppe (11) latérale d'une seule pièce, dont la forme correspond à la surface latérale d'un parallélépipède ouvert sur les faces frontales et dont les ouvertures sont fermées par deux éléments (10) formant fond identiques, caractérisé en ce que
- l'enveloppe (11) latérale et les éléments (10) formant fond sont en matière plastique,
- l'enveloppe (11) latérale et les éléments (10) formant fond sont reliés entre eux de manière amovible par une fermeture (10a, 12) à encliquetage,
- les quatre parois (11a) latérales de l'enveloppe (11) latérale sont reliées entre elles au moins sur trois grands côtés (3a), au moyen d'éléments (13) du genre d'une charnière,
- l'enveloppe (11) latérale est munie d'au moins une pièce (14) intérieure en matériau souple, servant à soutenir les lampes fluorescentes,
- les éléments (10) formant fond sont réalisés sous forme de plateaux de section transversale rectangulaire, qui comportent sur leurs petits côtés des parties (10a) en saillie, qui, pour leur part, rentrent dans des encoches (12) ajustées, ménagées dans les parois (11a) latérales de l'enveloppe (11) latérale.

8. Emballage réutilisable suivant la revendication 7, caractérisé en ce que la pièce intérieure est réalisée sous la forme d'une séparation d'espace qui comporte des parois de séparation continues et qui subdivise l'espace intérieur de l'enveloppe latérale en un grand nombre de compartiments cylindriques identiques.

9. Emballage réutilisable suivant la revendication 7, caractérisé en ce que l'emballage comporte deux pièces (14) intérieures identiques, qui sont constituées chacune d'un grand nombre de bandes (14a) souples en matière plastique, chaque bande (14a) en matière plastique étant fixée par ses extrémités aux parois (11a) latérales de l'enveloppe (11) latérale, si bien que les bandes de matière plastique de chaque pièce (14) intérieure forment une grille.

10. Emballage réutilisable de lampes fluorescentes en forme de barreau, l'emballage comportant une enveloppe (17) latérale d'une seule pièce, dont la forme correspond à la surface latérale d'un parallélépipède ouvert sur les faces frontales et dont les ouvertures sont fermées par deux éléments (16) formant fond identiques, caractérisé en ce que
- l'enveloppe (17) latérale et les éléments (16) formant fond sont en matière plastique,
- les quatre parois latérales de l'enveloppe (17) latérale sont reliées entre elles au moins sur trois grands côtés, au moyen d'éléments du genre d'une charnière,
- l'enveloppe (17) latérale et les éléments (16) formant fond sont reliés entre eux de manière amovible par une fermeture (16a, 17a, 16b, 17b) à encliquetage,
- les éléments (16) formant fond sont en forme de boîte et ont une section transversale rectangulaire, leurs parois latérales comportant des parties (16a, 16b) en saillie qui rentrent dans des encoches (17a, 17b) ajustées ménagées dans les parois latérales de l'enveloppe (17) latérale,
- les éléments (16) formant fond sont munis chacun d'une pièce (18) intérieure en un matériau souple, servant à soutenir les lampes fluorescentes.

11. Emballage réutilisable suivant la revendication 10, caractérisé en ce que l'emballage comporte deux pièces (14) intérieures identiques, qui sont montées chacune à l'intérieur des deux éléments (16) formant fond en forme de boîte et qui sont constituées d'un grand nombre de bandes (14a) souples en matière plastique, chaque bande (14a) en matière plastique étant fixée par ses extrémités à des parois latérales opposées d'un élément (16) formant fond en forme de boîte, si bien que les bandes de matière plastique forment une grille.

12. Emballage réutilisable suivant l'une des revendication 1, 7 ou 10, caractérisé en ce les éléments (13) du genre d'une charnière sont réalisés sous forme de bande souple en matière plastique.

13. Emballage réutilisable suivant l'une des revendication 1, 7 ou 10, caractérisé en ce l'enveloppe (3; 11; 17) latérale peut être aplatie.
